Europäisches Patentamt

European Patent Office

Office européen des brevets

(11) Publication number: 0 370 750
A1

# EUROPEAN PATENT APPLICATION

(21) Application number: 89312040.2

(22) Date of filing: 21.11.89

(51) Int. Cl.5: **B29C 67/22, C08G 18/48, C08G 18/08, //(B29K75/00, 105:04,B29L31:58)**

(30) Priority: 22.11.88 GB 8827280

(43) Date of publication of application:
30.05.90 Bulletin 90/22

(84) Designated Contracting States:
DE ES FR GB IT

(71) Applicant: BP Chemicals Limited
Belgrave House 76 Buckingham Palace Road
London, SW1W 0SU(GB)

(72) Inventor: Thanh, Huy Phan
La Veratte 16
CH-1260 Nyon(CH)
Inventor: Gatouillat, Gerard
61 Route de la Plantay
CH-1163 Etoy(CH)

(74) Representative: Smart, Peter John et al
W.H. BECK, GREENER & CO 7 Stone
Buildings Lincoln's Inn
London WC2A 3SZ(GB)

(54) Process for making foam articles.

(57) The present invention concerns a process for making a flexible or semi-flexible polyurethane foam article comprising at least two regions of differing hardness which process comprises the steps of:

(a) introducing a first foam formulation into an open mould,

(b) closing the mould, isolating the inside of the mould from the outside and optionally applying an overpressure of gas to the inside of the closed mould,

(c) allowing the first foam formulation to react until it has reached a non-rupturable state,

(d) releasing the overpressure of gas if appropriate, and opening the mould,

(e) optionally repeating steps (a) to (d) with one or more further second foam formulations,

(f) introducing a last foam formulations into the mould, and

(g) allowing the contents of the mould to rise to fill the mould and to cure.

The process is particularly adapted for making vehicle seats having regions of differing hardness.

figure 1

EP 0 370 750 A1

## PROCESS FOR MAKING FOAM ARTICLES

The present invention relates to the production of foams which contain integrated foam areas or layers having higher or lower hardnesses and densities. Such foams are particularly useful for seats. The process is particularly but not exclusively suitable for making polyurethane foam articles.

Seats, especially car seats, have to support the seated person under static and dynamic conditions in a way that the supporting force is compatibly distributed on to the human body. In addition to this a car seat needs to provide sufficient side stability in case of side acceleration which exists when driving the car along curves.

It is therefore desirable for seats to have relatively hard and soft portions. As it is known that such seats may be made from polyurethane foams, reinforced regions in such polyurethane foam are provided in a number of ways.

One method of preparing reinforced regions in polyurethane foam is to prepare a foam part of higher hardness and to introduce this separately prepared part into the softer foam part.

Another method is to embed a steel wire frame into the seat or to provide additional support to increase the hardness of the required areas.

However, any kind of insert which needs to be put into the moulds during foam seat production requires processing time, adds material cost and increases repair and scrap rates.

A further method is to use a mould design or separating walls to keep the two different foam mixtures substantially apart. This approach must allow sufficient contact between the two foams to ensure good bonding on curing. However, by this approach the structural modification of the seat frame is limited and again adds production cost.

Another method involves pouring sequentially into the mould foams made with different formulations. Such formulations eventually give foam with zones of different hardnesses. This method is however, in practice, limited to a certain mould design and position of the mould during the pouring process. In addition this method is very sensitive to the reactivity of the different formulations which have to be controlled with accuracy.

Today, manufacturers in the automotive industry tend to ask for car seats with more and more complex design, having different hardness profiles. To meet their requirements, it is difficult with the above methods to produce car seats with areas having different hardnesses.

According to the present invention there is provided a process for making a flexible or semi-flexible foam article comprising at least two regions of differing hardness which process comprises the steps of:

(a) introducing a first foam formulation into a mould,

(b) isolating the inside of the mould from the outside,

(c) allowing the first foam formulation to react, e.g. until it has reached a non-rupturable state,

(d) releasing any overpressure of gas in the mould,

(e) optionally repeating steps (a) to (d) with one or more further foam formulations,

(f) introducing a last foam formulation into the mould, and

(g) allowing the contents of the mould to rise to fill the mould and to cure.

One or more, e.g. all, of the polymer foam formulations employed is preferably a polyurethane foam formulation.

The foam formulations are not necessarily different in composition. Variations in foam hardness can be achieved by selecting differing curing conditions. Also the "first" foam formulation need not necessarily be introduced into the mould before any other composition has been introduced and cured, e.g. before the process of the invention starts a foam formulation may already have been at least partially cured in the mould without the interior of the mould being isolated.

Preferably, the mould is open during each step (a) and (f), so that the foam formulations may be introduced by pouring, and is then closed after each said step (a) and (f).

On completion of step (d) two options are available. First, if a two layered foam is required a second foam formulation is introduced and the contents of the mould are allowed to rise until the mould is filled. Thereafter the contents of the mould are allowed to cure in the normal way. If, on the other hand, further layers are required the mould can be opened and steps (a) to (d) repeated as many times as necessary. During such repeat(s) suitable foam formulations including the first and second foam formulations can be used. If this method is adopted then the process will be terminated by eventually allowing the total contents of the mould cure.

Preferably, during the expansion of the last foam formulation, the mould will be closed but vented to allow gas escape therefrom.

The mould to be used in this invention can be any type of mould currently used by car manufacturers. If an additional pressure is required, a valve mounted on the cover of the mould is preferably provided so that gas can be introduced to provide said overpressure and so that the pressure can be measured accurately or can be controlled, e.g. kept constant by the action of a pressure relief valve.

The foam formulations employed in this invention are not specific to the process and are typically obtained by mixing together a polyol stream and an isocyanate stream and then discharging the mixture into the mould.

The polyol stream generally contains, as is well known to those skilled in this technology, a formulated polyol, i.e. some or all of polyols, polymer polyols, blowing agents, catalysts, surfactants, e.g. silicone surfactants, and other additives such as chain extenders, cross linkers, colouring agents, fillers and/or flame retardants. However, one or more of the components additional to the polyol(s) can be added separately if desired.

Examples of preferred polyols are those in which 40 weight precent of the total polyol content is constituted of a polyether triol having the following additional characteristics:

(a) an average primary hydroxyl content of at least 40 mole percent (or no more than 60 mole percent of the less reactive secondary hydroxyl groups); and

(b) an average molecular weight of from about 2000 to about 8000.

Preferably, such polyether triols for use as components of flexible foam formulations contain from about 60 to about 90 mole percent of primary hydroxyl groups and have an average molecular weight of from about 4000 to 7000.

Consistent with their trifunctionality and the aforesaid respective ranges of molecular weights, such polyether triols have hydroxyl numbers from 84 to 21, preferably from 42 to 24. These highly reactive polyether triols are provided by oxyalkylation of a trifunctional alcohol starter such as glycerol and the like, with propylene oxide and ethylene oxide. Usually, the total ethylene oxide content of the polyether triol is between about 7 and about 20 weight percent, expressed on the basis of total alkylene oxide feed during the oxyalkylation reaction. The high primary hydroxyl content is introduced by capping of the polyoxalkylene chains with at least a portion of the total ethylene oxide feed.

If the flexible foam is to be a high resilience flexible foam, polyether triols may be employed in combination with other polyols to control the degree of softness or firmness of the foam and to vary the load bearing properties.

In particular, the formulated polyol may contain polymer polyols which in turn contain finely dispersed or grafted organic or inorganic materials to provide improved load bearing properties. Examples of such polymer polyols are graft polymer polyols prepared by polymerising ethylenically unsaturated monomers e.g. acrylonitrile and/or styrene in a polyether polyol or the so called PHD or PIPA dispersion polymer polyols. The polyether polyol in which the polymerisation takes place preferably has the characteristics indicated above.

Other conventional blowing agents can be used in place of water.

The catalysts used are known per se, e.g. tertiary amines such as triethylamine, tributylamine, N-methyl-morpholine, N-ethyl-morpholine, N,N,N',N'-tetramethyl-ethylene-diamine, 1,4-diaza-bicyclo- (2,2,2)-octane, N-methyl-N'-dimethyl-amino-ethylpiperazine, N,N-dimethyl, benzylamine, bis-(N,N-diethylamino-ethyl)adipate, N,N-diethylbenzylamine, pentamethyl diethylene-triamine, N,N-dimethylcyclohexylamine, N,N,N',N'-dimethyl-phenylethylamine, 1.2-dimethyl imidazole and 2-methylimidazole, triethylene diamine, bis(2-dimethylamino ethyl) ether.

Tertiary amines which contain hydrogen atoms capable of reacting with isocyanate groups may also be employed, e.g. triethanolamine, triisopropanolamine, N-methyldiethanolamine, N-ethyldiethanolamine, N,N-dimethylethanolamine or their reaction products with alkylene oxides such as propylene oxide and/or ethylene oxide.

Organic metal compounds may also be used as catalysts according to the invention, especially organic tin compounds. The organic tin compounds used are preferably tin (II) salts of carboxylic acids such as tin (II)-acetate, tin (II) octoate, tin (II)-ethylhexonoate and tin (II)-laurate and the dialkyl tin salts of carboxylic acids such as dibutyl tin diacetate, dibutyl tin dilaurate, dibutyl tin maleate or dioctyl tin diacetate.

The catalysts are generally used in a quantity of between 0.002 and 10% by weight, based on the total quantity of polyol.

In producing flexible polyurethane foam in accordance with the method of this invention, a minor amount of an organosilicone surfactant may also be present as an additional component of the polyurethane-forming reaction mixture. When used, such surfactants are usually present in amounts up to about 5 parts by weight per 100 parts by weight of total polyol reactant. Suitable classes of silicone surfactants are the polysiloxane-polyoxyalkylene block copolymers wherein the respective blocks are joined through silicon-to-carbon or silicon-to-oxygen-to-carbon bonds and the respective polyoxalkylene blocks are bonded to different silicon atoms of the polysiloxane backbone to form a comb-like structure. Usually, the polysiloxane blocks are trialkylsiloxy end blocked. In addition to the siloxy units to which the pendant polyoxyalkylene chains are bonded, the polysiloxane backbone is formed of difunctional siloxy units wherein the respective two remaining valences of silicon are satisfied by bonds to organic radicals. Illustrative of such organic radicals are the hydrocarbons groups having from 1 to 12 carbon atoms including alkyl, aryl, aralkyl, bicycloheptyl and halogen substituted derivatives of such groups. The polyoxalkylene blocks are usually constituted of oxyethylene units, oxypropylene units or a combination of such units, and the polyoxalkylene chains are hydroxyl-terminated or capped with a monovalent organic group such as alkyl, aryl, aralkyl, acyl, carbamyl and the like.

The organosilicone component is preferably present in formulations in an amount between about 0.025 and about 2 parts by weight per 100 parts by weight of total polyol.

Generally, the blowing agent is employed in an amount from about 1 to about 15 parts by weight per 100 parts by weight of polyol, the particular blowing agent and amount thereof depending upon the type of foam product desired. Flexible foam formulations usually contain no more than about 6 pphp of water. The selection and amount of blowing agent in any particular foam formulation is well within the skill of those skilled in the polyurethane foam art. Suitable organic blowing agents are halogenated alkanes, such as methylene chloride, chloroform, ethylidene chloride, vinylidene chloride, monofluorothrichloromethane, chlorofluoromethane or dichlorodifluoremethane. A blowing effect can also be obtained by adding compounds which decompose at temperatures above room temperature to liberate gases, e.g. azo compounds such as azoisobutyric acid nitrile which liberate nitrogen.

Other ingredients may also be included optionally. They include chain extenders, crosslinkers, colouring agents, fillers, flame retardants and the like.

Chain extenders are difunctional compounds containing active hydrogen (i.e. hydrogen which will react with isocyanate groups under the conditions used in foaming). Examples of suitable compounds containing active hydrogen are compounds containing hydroxyl or amines groups.

Usually chain-extenders which react to liberate gas, e.g. by formation of water, will not be employed as this will lead to changes in the density of the foam. Examples of suitable chain extenders are diols such as ethane diol, propane-1, 2-diol, propane-1, 3-diol, propane-1, 4-diol, hexanediol, diethylene glycol, triethylene glycol, tetraethylene glycol and higher polyglycols preferably having molecular weights in the range 2000 to 3000.

Cross-linkers are compounds containing more than 2 active hydrogen atoms per molecule, preferably more than 3. Examples of such cross-linkers are diethanolamine, triethanolamine, N,N,N′,N′-tetrakis-(2-hydroxypropyl) ethylene diamine, and phenol/formaldehyde/aniline condensation products.

The active hydrogen content of the cross-linker or chain extender is preferably relatively high so as to allow a significant effect on hardness to be obtained without requiring an excessive amount of additive. The active hydrogen content may for example correspond to a hydroxyl number as low as 50, particularly when a chain extender is used. The cross-linker or chain extender preferably has an active hydrogen content corresponding to a hydroxyl number of at least 100, more preferably 600 to 1500.

Where the cross linker or chain extender is fed as an additive to one of the main reaction streams it is preferably used at the rate of 2 to 10 parts by weight per 100 parts of polyol.

It is also sometimes desirable to include various additives in the reaction mixture such as colouring agents, fillers, flame retardants and the like. Suitable colouring agents are, for example carbon black, titanium dioxide, methyl blue, chromium red and the like. Suitable fillers are fatty acids including tall oil fatty acids or tall oil per se, which, if desired, may be halogenated for example, with chlorine or bromine, vermiculite, saw dust, synthetic plastics including vinyl polymers such as, polyvinyl chloride, polystyrene and the like. Suitable flame retardants are antimony oxide, tris (chloroethyl) phosphate, tricresyl phosphate, triphenyl phosphate, melamine and the like.

The isocyanate component employed in this invention for mixing with active hydrogen compounds are those having the general formula:

$Q(NCO)_i$

wherein i is an integer of two or more and Q is an organic radical having the valence of i. Q can be a substituted or unsubstituted hydrocarbon group (e.g. an alkylene or an arylene group). Examples of such compounds include hexamethylene diisocyanates, phenylene diisocyanates and tolyene diisocyanates.

Q can also represent a polyurethane radical having a valence or i in which case $Q(NCO)_i$ is a composition conventionally known as a pre-polymer. Such pre-polymers are formed by reacting a stoichiometric excess of a polyisocyanate with an active hydrogen-containing component, especially polyhydroxyl containing materials or polyols.

4

More specifically, the polyisocyanate component employed in this invention also includes the following specific compounds as well as a mixture of two or more of them, 2,4-tolylene diisocyanate, 2,6-tolylene diisocyanate, crude tolylene diisocyanate, bis(4-isocyanatophenyl) methane, polyphenylmethylene polyisocyanates that are produced by phosgenation of aniline formaldehyde condensation products.

It is particularly preferred to carry out the process of the present invention using foam formulations in which the formulations giving softer and harder foams differ in their content of any one or more of:

1. polymer polyols,

2. isocyanate with a functionality greater than two, i.e. with more than two isocyanate groups per molecule, e.g. the content of polyphenylmethylene polyisocyanate in bis(4-isocyanatophenyl)methane

3. active hydrogen containing compound which may be chain extender or cross-linker.

After the first foam formulation has been introduced into the mould the mould is closed (including any vent holes) so that the contents are isolated from the outside. Optionally, an excess pressure of gas can be applied to the contents of the mould. Such an excess pressure is suitably in the range 0 to 10 bars, preferably 0 to 2 bars over and above atmospheric pressure. The gas mentioned in this process can be any non-flammable gas, i.e. nitrogen, carbon dioxide or simply, and preferably, air.

The overpressure of gas is released and the second formulation poured when the first foam has reached a non-rupturable state. These steps are preferably carried out at a time t which is related to the gel time (gt) of the first foam formulation. Gel time is defined as the time in seconds from the time of mixing the foam ingredients to the moment that a "string" can be obtained from the foam with a probe. At this stage, the surface of the foam remains sticky and the foam generally has not reached its final rise. Gel time can be affected by the nature of the polyol and isocyanate used and by the nature and amount of catalyst used, and those skilled in the formulations of polyurethane will readily understand how to control and vary gel times.

In making high resilience flexible polyurethane foams, the gel time typically varies between 25 and 120 sec., preferably between 45 to 70 sec. The time t for the second pouring is therefore defined by the relationship:

$$t = gt + (x.gt)/100$$

where x can vary between 20 to 150, preferably between 50 and 100. Releasing the pressure inside the mould at time t calculated with x which is less than 20 may create partial foam collapse. If x is higher than 150, the foam may be already too cured so it cannot bond to the next foam layer. Therefore, time t can be generally defined as the time when the foam is stable but not fully cured.

Although the process described in this invention may be carried out manually, it is preferable to use a robot unit to control the pouring patterns of different foam formulations.

The invention is now illustrated by the following Examples.

In the Examples, reference is made to the accompanying drawings in which:-

Figure 1 is a plan view of a mould for use in the invention showing pouring points for a first foam formulation as used in Example 4;

Figure 2 is a similar view to Figure 1, showing pouring sites for a second foam formulation as used in Example 4;

Figure 3 is a plan view of a plan view of a seat part demoulded from the mould of Figures 1 and 2;

Figure 4 is a sectional front elevation of the seat part of Figure 3;

Figure 5 is a view similar to Figure 1 showing alternative pouring sites for first and second foam formulations as used in Example 5;

Figure 6 is a view similar to Figure 5, showing further pouring sites for the second foam formulation of Example 5;

Figure 7 is a plan view of a seat part demoulded from the mould of Figure 5;

Figure 8 is a sectional front elevation of the seat part of Figure 7;

Figure 9 is a plan view of the mould of Figure 1 showing further pouring points for the second foam formulation as used in Example 6;

Figure 10 is a view similar to Figure 9 showing further pouring sites for the last foam formulation used in Example 6;

Figure 11 is a plan view of a seat part demoulded from the mould of Figure 9; and

Figure 12 is a sectional front elevation of the seat part of Figure 11.

Examples

## Formulation A

| Polyol component A | Parts by weight |
|---|---|
| U-13.11 | 60 |
| U-13.09 | 40 |
| Water | 3.0 |
| Dabco 33 LV | 0.2 |
| Niax C-225 | 0.5 |
| SH-210 | 0.7 |

### Isocyanate Component A

| | |
|---|---|
| IS-1 | 37.1 |

Notes

1. U-13.11 is a polyether polyol produced by addition-polymerising propylene oxide to glycerol and then addition-polymerising ethylene oxide. The content of primary hydroxyl is 75% and the hydroxyl number is approximately 35 mg KOH/g.

2. U.13.09 is a grafted polymer polyol prepared by polymerising 10% of acrylonitrile and 10% of styrene in a polyether polyol (hydroxyl number: 35 mg/KOH/g). Hydroxyl number is approximately 28 mg/KOH/g.

3. Dabco 33 LV is a commercial amine catalyst for polyurethane foam production based on triethylene diamine supplied by Air Products Inc.

4. Niax C-225 is a commercial catalyst available from Union Carbide Corporation.

5. SH-210 is a commercial silicone surfactant available from Union Carbide Corporation.

6. IS-1 is a TDI:MDI blend isocyanate (80% TDI, 20% Polymeric MDI).

## Formulation B

| Polyol component B | Parts by weight |
|---|---|
| RP-1413 | 75 |
| U-13.15 | 25 |
| Water | 3.2 |
| DEOA (88%) | 0.3 |
| Dabco 33 LV | 0.5 |
| Niax A-1 | 0.05 |
| SH-207 | 1.5 |

| Isocyanate Component B | |
|---|---|
| IS-1 | 38.1 |

Notes

1. Dabco 33 LV is a commercial amine catalyst for polyurethane foam production based on triethylene diamine supplied by Air Products Inc.

2. Niax A-1 is bis(2-dimethylaminoethyl) ether, a commercially available amine catalyst for polyurethane production.

3. SH-207 is a commercial silicone surfactant available from Union Carbide Corporation.

4. RP-1413 is a grafted polymer-polyol prepared by polymerising 19.6% of styrene and 8.4% of acrylonitrile in a polyether polyol of hydroxyl

7

number = 35 mg KOH/g. The final hydroxyl number is approximately 25 mg KOH/g.

5. U-13.15 is a grafted polymer-polyol having 7.5% of polystyrene and 7.5% of polyacrylonitrile in a polyether polyol of hydroxyl number = 35 mg KOH/g. The final hydroxyl number is approximately 28 mg KOH/g.

6. IS-1 is a TDI:MDI blend isocyanate.

Example 1

A high pressure CANNON foaming machine capable of delivering and mixing both Formulation A and B was employed. The foaming machine was used in conjunction with ASEA robot.

Two foam formulations A and B were employed. These were obtained by mixing and dispensing formulations A and B at the following rates:

A: Polyol Component A 187 grams/sec
Isocyanate Component A 66 grams/sec
B: Polyol Component B 138 grams/sec
Isocyanate Component B 49 grams/sec

Processing Details

Mould type: 9 litre cast aluminium laboratory mould
Mould temperature: 50-55° C
The following processing steps were used:

1. A poured into the centre of the mould for 1.5 secs.
2. Mould immediately closed (including vent holes).
3. Mould opened after 90 seconds.
4. B immediately poured for 1.5 seconds.
5. Mould closed (with vent holes open).
6. Contents of mould demoulded after 8 minutes.

The demoulded part was cut after 3 days of conditioning (50% relative humidity, 23° C) and density and compression force deflection (CFD) hardness (ISO 3396.1-79) was measured:

|  | Foam A | Foam B |
| --- | --- | --- |
| Density (kg/m$^3$): | 57 | 57 |
| CFD (40%, kPa): | 3.8 | 11.1 |

The demoulded part comprises two layers bonded together at the interface.

Example 2

This Example shows the production of a polyurethane flexible foam moulded part which has two layered foams having different density and hardness. Machine mould conditions and formulations are as described in Example 1.

Mould type: As Example 1 with 3-way valve mounted on the cover

Mould temperature: 50-55° C.

Processing Details

1. A poured for 1.5 seconds into the centre of the mould.
2. Mould closed (including vent holes).
3. Inside of mould pressurised with 0.5 bar of air via 3-way valve.
4. Pressure released and mould opened after 90 seconds.
5. B poured for 1.5 seconds.
6. Mould closed (vent holes open).
7. Contents demoulded after 8 minutes.

| Results | | |
|---|---|---|
| | Foam A | Foam B |
| Density (kg/m$^3$): | 70 | 57 |
| CFD (40%, kPa, ISO 3396.1-79): | 5.2 | 12.4 |

## Example 3

This Example shows the effect of varying the pressure inside the mould. In this Example an ADMIRAL mixing machine was used and only a single formulation poured into the mould. The formulation A used was that obtained by mixing polyol component A and Isocyanate component A at the respective rates of discharge of 203 grams/sec and 72 grams/sec. The mould and mould temperature were as defined in Example 1. A series of experiments were run using the procedure of Example 2, except that, after the formulation was poured and the pressure applied, pressure was maintained for the full 8 minutes. At the end of this time the contents were demoulded. The results below shows the properties of the final foam as a function of pressure for a given mass of foam (x) poured into the mould.

Results

| A. Amount (x) of foam : 265 g | | | | |
|---|---|---|---|---|
| Vent holes | Open | Closed | | |
| Additional pressure (y) (bar) | ---- | 0 | 0.5 | 1.0 |
| Density (kg/m$^3$) | 35 | 63 | 70 | 88 |
| CFD (40%, kPa, ISO 3396.1-79) | 1.8 | 5.6 | 6.0 | 7.5 |

| B. Amount (x) of foam: 385 g | | | | |
|---|---|---|---|---|
| Vent holes | Open | Closed | | |
| Additional pressure (y) (bar) | ---- | 0 | 0.5 | 1.0 |
| Density (kg/m$^3$) | 42 | 71 | 75 | 77 |
| CFD (40%, kPa, ISO 3396.1-79) | 2.4 | 7.7 | 8.7 | 10.1 |

| C. Amount (x) of foam: 510 g | | | | |
|---|---|---|---|---|
| Vent holes | Open | Closed | | |
| Additional pressure (y) (bar) | ---- | 0 | 0.5 | 1.0 |
| Density (kg/m$^3$) | 55 | 80 | 88 | 91 |
| CFD (40%, kPa, ISO 3396.1-79) | 4.6 | 10.7 | 11.2 | 12.7 |

Example 4

In this Example, a high pressure CANNON foaming machine and an ASEA robot unit were in conjunction with formulations A and B.
Mould type: Ford Escort front seat from cast aluminium (22 litres volume).
Mould temperature : 50-55° C

Processing Details

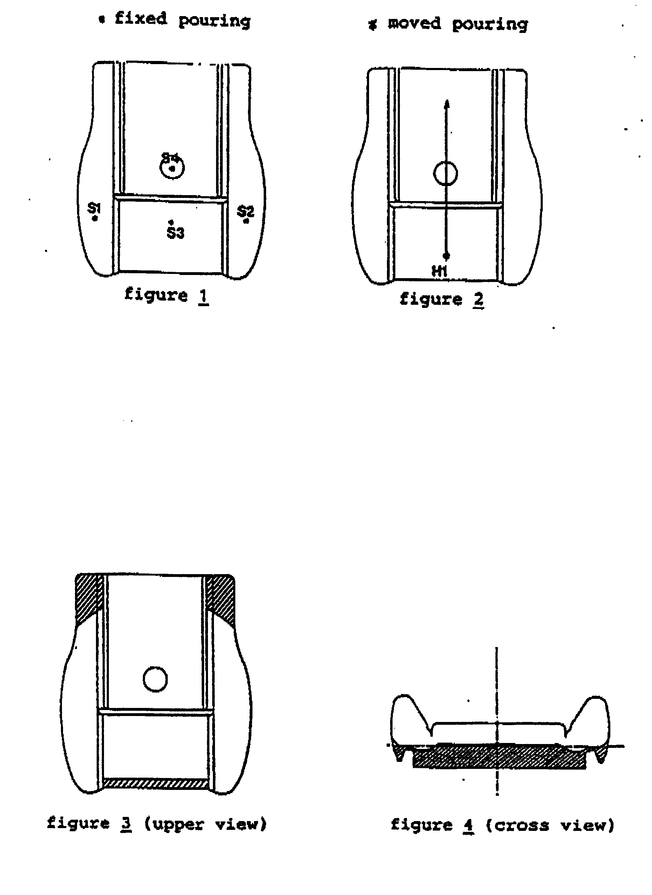

1. A poured sequentially at fixed points S1, S2, S3 and S4 (see Figure 1) for a time of 1 second at each point.
2. Mould closed (vent holes closed).
3. Mould opened after 90 seconds.
4. B poured along line shown from H1 (see Figure 2) for 1.5 seconds.
5. Mould closed (vent holes open).
6. Contents demoulded after 8 minutes.
The demoulded seat is shown in Figures 3 and 4. In these figures the cross-hatched areas correspond to foam B.

Example 5

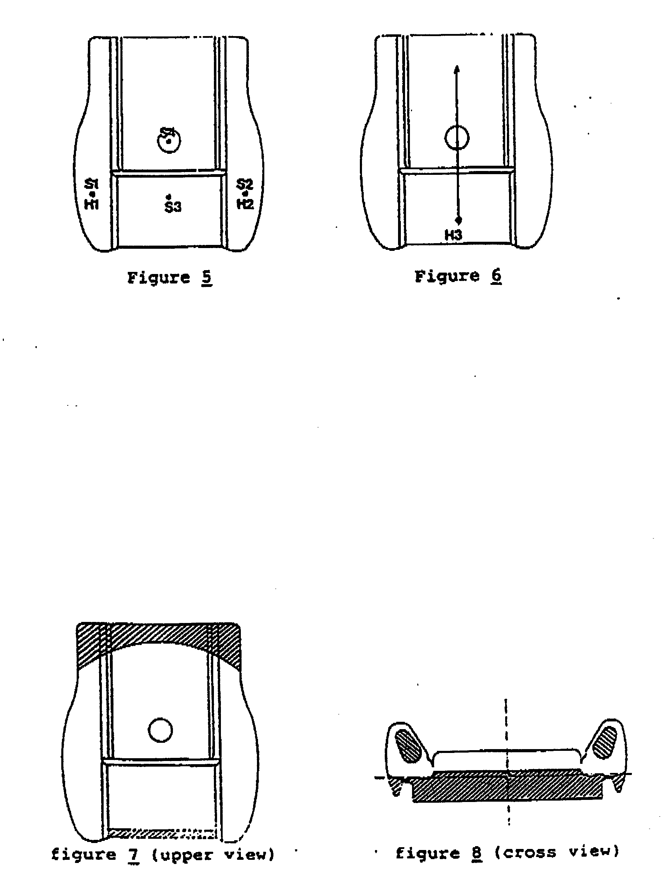

Example 4 was repeated except that step (1) of the process comprised pouring in the sequence S1, H1, S2, H2, S3, S4 (Figure 5) with A being poured at S1, S2, S3 and S4 and B at H1 and H2. The pouring times in seconds were as follows:
S1 : 1.0
H1 : 0.5
S2 : 1.0
H2 : 0.5
S3 : 1.0
S4 : 1.0
Step (4) comprised pouring B along the line shown from H3. The demoulded part is shown in Figures 7 and 8.

Example 6

Example 4 was repeated with the following process details:
1. A poured sequentially at points S1, S2, S3 and S4 (see Figure 1) for the following pouring times (seconds):
S1 : 0.5
S2 : 0.5
S3 : 0.5
S4 : 1.1
2. Mould closed (vent holes open).
3. Mould opened after 90 seconds.

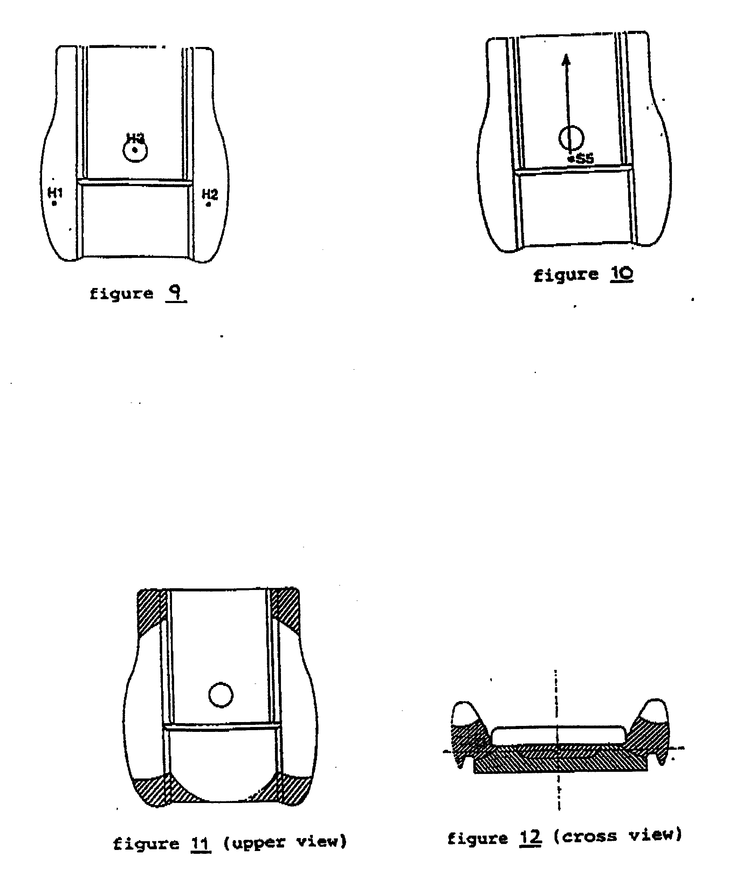

4. B poured sequentially at points H1, H2 and H3 (Figure 9) for the following pouring times (seconds):

H1 : 0.5

H2 : 0.5

H3 : 0.5

5. Mould closed (vent holes closed).

6. Mould opened after a further 90 seconds.

7. A poured along line shown from S5 (Figure 10) for 2.5 seconds.

8. Mould closed (vent holes open).

9. Part demoulded after 8 minutes. The demoulded part is shown in Figures 11 and 12.

**Claims**

1. A process for making a flexible or semi-flexible foam article comprising at least two regions of differing hardness which process comprises the steps of:

(a) introducing a first foam formulation into a mould,

(b) isolating the inside of the mould from the outside,

(c) allowing the first foam formulation to react,

(d) releasing any overpressure of gas in the mould,

(e) optionally repeating steps (a) to (d) with one or more further foam formulations,

(f) introducing a last foam formulation into the mould, and

(g) allowing the contents of the mould to rise to fill the mould and to cure.

2. A process as claimed in Claim 1, wherein the mould in open during each step (a) and (f) and is closed after each said step (a) and (f).

3. A process as claimed in Claim 1 or Claim 2, wherein in step (b) an overpressure of gas is applied to the inside of the closed mould.

4. A process as claimed in Claim 3, wherein said overpressure of gas is in the range of 0 to 10 bars over and above atmospheric pressure.

5. A process as claimed in any one of Claims 1 to 4, wherein in step (g) the mould is vented and the contents of the mould are allowed to rise until the mould is filled and the contents are then cured.

6. A process as claimed in any one of Claims 1 to 5, wherein in step (d) any overpressure of gas is released and the second foam formulation is introduced into the mould at the time t defined according the following formula:

$t = gt + (x.gt)/100$

wherein gt is the gel time of the first foam formulation and x can vary between 20 to 150.

7. A process as claimed in any one of Claims 1 to 5, wherein the second foam formulation is introduced into the mould at the time when the first foam is stable but not fully cured.

8. A process as claimed in any preceding claim, wherein each foam formulation is a polyurethane foam formulation.

9. A process as claimed in Claim 8, wherein each foam formulation introduced into the mould comprises (A) a polyol component in which 40 weight percent of the total polyol content is constituted of polyether triol having the following characteristics:

(a) an average primary hydroxyl content of at least 40 mole percent; and

(b) an average molecular weight of from about 2000 to about 8000

and (B) an isocyanate component having the following formula:

$Q(NCO)i$

wherein i is an integer of two or more and Q is an organic radical having the valence i.

10. A process as claimed in Claim 8 or Claim 9, wherein each foam formulation introduced into the mould additionally contains one or more of blowing agents, catalysts, surfactants, chain extenders, crosslinkers, colouring agents, fillers and/or flame retardants.

11. A process as claimed in any one of Claims 8 to 10, wherein foam formulations giving softer and harder foams differing in their content of any one or more of

(a) polymer polyols

(b) isocyanate with functionality greater than 2, and

(c) active hydrogen containing compound are used.

• fixed pouring                  ≉ moved pouring

figure 1

figure 2

figure 3 (upper view)

figure 4 (cross view)

Figure **5**

Figure **6**

figure **7** (upper view)

figure **8** (cross view)

EP 0 370 750 A1

figure 9

figure 10

figure 11 (upper view)

figure 12 (cross view)

## DOCUMENTS CONSIDERED TO BE RELEVANT

| Category | Citation of document with indication, where appropriate, of relevant passages | Relevant to claim | CLASSIFICATION OF THE APPLICATION (Int. Cl. X 5) |
|---|---|---|---|
| A | <u>GB - A - 2 197 659</u> (BP CHEMICAL LIMITED) * Totality * | 1,7-11 | B 29 C 67/22 C 08 G 18/48 C 08 G 18/08// //B 29 K 75:00 |
| A | <u>DE - A1 - 2 938 231</u> (MILSCO) * Totality * | 1,7,8, 10 | B 29 K 105:04 B 29 L 31:58 |
| A | <u>GB - A - 2 084 163</u> (TEXACO) * Claims; page 1, lines 27-29; page 2, lines 3-47 * | 1,8-11 | |
| A | <u>EP - A2 - 0 251 659</u> (NAMBA) * Totality * | 1,7,8, 10 | |
| A | <u>EP - A1 - 0 267 490</u> (BAYER) * Totality * | 1,7,8, 10 | |

TECHNICAL FIELDS SEARCHED (Int. Cl. X 5)

B 29 C
B 29 D
C 08 G

The present search report has been drawn up for all claims

| Place of search | Date of completion of the search | Examiner |
|---|---|---|
| VIENNA | 31-01-1990 | MAYER |